# EUROPÄISCHE PATENTANMELDUNG

(11) **EP 1 593 947 A1**
(43) Veröffentlichungstag der Anmeldung: **09.11.2005**
(21) Anmeldenummer: 04010707.0
(22) Anmeldetag: 05.05.2004
(51) Int. Cl.: G01L 5/00

(54) **Vorrichtung zur Messung von Kräften**

(71) Anmelder: CONCEPT Technologie GmbH, 8101 Gratkorn (AT)
(72) Erfinder: Deutscher, Erwin, 8181 St. Ruprecht an der Raab (AT)
(74) Vertreter: Manitz, Finsterwald & Partner GbR

(57) **Zusammenfassung**

Die Erfindung betrifft eine Vorrichtung zur Messung von Kräften, insbesondere von bei einem Aufprall von Kraftfahrzeugen in Crashanlagen auftretenden Kräften, mit wenigstens einem Gehäuse, in dem ein eine Prallplatte aufweisender Kolben verschiebbar gelagert ist, wobei zwischen einem Boden des Gehäuses und dem Kolben eine abgeschlossene Druckkammer gebildet ist, die mit einem Druckmedium gefüllt ist, und mit einem mit der Druckkammer kommunizierenden Drucksensor zur Messung von durch Beaufschlagung der Prallplatte verursachten Druckänderungen in dem Druckmedium.

## Beschreibung

Die Erfindung betrifft eine Vorrichtung zur Messung von Kräften, insbesondere zur Messung von Kräften, wie sie bei einem Aufprall von Kraftfahrzeugen in Crashanlagen auftreten.

Bei einem Aufprall eines Kraftfahrzeugs auf eine Wand einer Crashanlage können lokale Kraftspitzen von mehreren 100 kN auftreten. An eine Vorrichtung zur Kraftmessung in einer solchen Anlage besteht also die Anforderung einer genauen Messung von extrem hohen Kräften, die jeweils nur über sehr kurze Zeiträume wirken. Die Messvorrichtung soll bei der Messung nicht beschädigt werden.

Bekannte Vorrichtungen der eingangs genannten Art basieren zum einen auf der Verwendung von Piezoelementen und zum anderen auf der Verwendung von Dehnungsmessstreifen. Während Vorrichtungen des ersten Typs sehr kostspielig sind, weisen letztere Defizite in der Messgenauigkeit auf. Außerdem tritt bei beiden Typen von Vorrichtungen ein Materialhystereseeffekt auf, der sich nachteilig auf die Reproduzierbarkeit der Messergebnisse auswirkt.

Der Erfindung liegt daher die Aufgabe zugrunde, eine Vorrichtung zur Messung von Kräften zu schaffen, die kostengünstig und robust ist und dauerhaft zuverlässige Messergebnisse mit möglichst hoher Genauigkeit gewährleistet.

Zur Lösung der Aufgabe ist eine Vorrichtung mit den Merkmalen des Anspruchs 1 vorgesehen.

Die erfindungsgemäße Vorrichtung umfasst wenigstens ein Gehäuse, in dem ein eine Prallplatte aufweisender Kolben verschiebbar gelagert ist, wobei zwischen einem Boden des Gehäuses und dem Kolben eine abgeschlossene Druckkammer gebildet ist, die mit einem Druckmedium gefüllt ist, und einen mit der Druckkammer kommunizierenden Drucksensor zur Messung von durch Beaufschlagung der Prallplatte verursachten Druckänderungen in dem Druckmedium. Die erfindungsgemäße Messvorrichtung weist einen einfachen und robusten Aufbau auf. Sie lässt sich daher mit vergleichsweise geringem wirtschaftlichen Aufwand herstellen und ermöglicht einen im wesentlichen wartungsfreien Betrieb. Eine einzige solche Einheit aus Gehäuse, Kolben, Prallplatte, Druckkammer, Druckmedium und Drucksensor bildet eine kompakte Kraftmesszelle. In Crashanlagen zum Einsatz kommende Prallwände können mit grundsätzlich beliebig vielen derartigen Kraftzellen versehen werden, deren Prallplatten dann gewissermaßen die Kraftsensoren der Prallwand bilden. Eine solche Prallwand ist ebenfalls eine Vorrichtung zur Messung von Kräften im Sinne der Erfindung.

Vorteilhafte Ausführungsformen der Erfindung sind in den Unteransprüchen, der Beschreibung und der Zeichnung angegeben.

Gemäß einer vorteilhaften Ausbildung der Erfindung ist das Druckmedium ein Fluid, insbesondere eine Flüssigkeit und vorzugsweise ein Öl. Flüssigkeiten und insbesondere Öle weisen eine nur sehr geringe Kompressibilität auf, so dass eine Beaufschlagung der Prallplatte bei einem Aufprall eines Kraftfahrzeugs nahezu ausschließlich zu einer Druckerhöhung, die unter Umständen mehrere 100 bar betragen kann, in dem Druckmedium führt. Die Verwendung von Öl als Druckmedium erlaubt somit eine nahezu verlustfreie Messung und liefert daher besonders genaue Messergebnisse. Eine Materialhysterese, die z.B. durch eine sich nach mehreren Kraftstößen nicht mehr zurückbildende Kompression des Druckmediums verursacht wird, tritt bei der Verwendung von Öl nicht auf, so dass auch eine Reproduzierbarkeit der Messergebnisse gewährleistet ist.

Vorzugsweise steht das Druckmedium in einer Ruhestellung der Vorrichtung unter einem erhöhten Arbeitsdruck. Ein geeigneter Arbeitsdruck kann einige bar, z.B. 1-5 bar Überdruck, betragen. Durch den erhöhten Arbeitsdruck ist das Druckmedium in der Ruhestellung bereits vorkomprimiert, was einer mechanischen Vorspannung des Druckmediums entspricht. Dadurch ist sichergestellt, dass alle bei Normaldruck in der Druckkammer eventuell noch vorhandenen Hohlräume mit dem Druckmedium ausgefüllt sind. Mit anderen Worten wird auf diese Weise eine bei Normaldruck ggf. noch vorhandene Restkompressibilität beseitigt. Eine auf die Prallplatte wirkende Kraft kann wird deshalb im wesentlichen verlustfrei durch das vorgespannte Druckmedium an den Drucksensor übertragen. Die Messgenauigkeit ist dadurch noch weiter erhöht.

Gemäß einer besonders bevorzugten Ausführungsform der Erfindung ist eine Nachstelleinrichtung vorgesehen, durch die der Arbeitsdruck stets auf einem vorgegebenen Wert gehalten werden kann. Die Nachstelleinrichtung ermöglicht im Falle eines Abfalls des Arbeitsdrucks, beispielsweise aufgrund von Verlusten des Druckmediums durch Lecks, eine Nachregulierung des Arbeitsdrucks, mit anderen Worten eine Erhöhung des Drucks auf den gewünschten Arbeitsdruck. Dadurch ist eine dauerhafte Messgenauigkeit noch besser sichergestellt und eine noch bessere Reproduzierbarkeit der Messung gewährleistet.

Vorteilhafterweise umfasst die Nachstelleinrichtung einen Ausgleichskolben, der in axialer Richtung bewegbar in einer Durchgangsbohrung des Kolbens gelagert ist, die mit der Druckkammer in Verbindung steht. Das Druckmedium befindet sich somit nicht nur in der Druckkammer, sondern auch in einem Abschnitt der Durchgangsbohrung, der am einen Ende in die Druckkammer übergeht und der am anderen Ende durch den Ausgleichskolben begrenzt ist. Durch eine Bewegung des Ausgleichskolbens in Richtung der Druckkammer kann auf einfache Weise das in dem genannten Abschnitt der Durchgangsbohrung und in der Druckkammer befindliche Druckmedium vorgespannt, d.h. vorkomprimiert werden, und somit der Druck in dem Druckmedium auf den gewünschten Arbeitsdruck erhöht werden. Umgekehrt kann der Druck durch eine Bewegung des Ausgleichskolbens von der Druckkammer weg auch verringert werden.

Die Nachstelleinrichtung kann manuell betätigbar sein. Dies ermöglicht bei einem Druckabfall eine einfache und schnelle Nachjustierung des gewünschten Arbeitsdrucks und trägt zu einer Erhöhung der Messgenauigkeit und Zuverlässigkeit der Messvorrichtung bei.

Alternativ kann die Nachstelleinrichtung selbsttätig sein. Auf diese Weise wird der Druck in dem Druckmedium bei Bedarf automatisch nachgeregelt. Der gewünschte Arbeitsdruck wird folglich auch ohne menschliches Einwirken dauerhaft eingehalten. Dadurch ist die Zuverlässigkeit der Messvorrichtung, insbesondere die Reproduzierbarkeit der Messergebnisse noch besser gewährleistet.

Bei einer besonders bevorzugten Ausführungsform ist ein Ausgleichskolben der Nachstelleinrichtung insbesondere durch ein Federelement, bevorzugt durch eine Schraubendruckfeder, in Richtung der Druckkammer vorgespannt. Die Nachstelleinheit ist hierdurch gewissermaßen mit einem Energiespeicher versehen. Bei Verwendung eines Federelementes bildet dieses quasi ein Kraftreservoir, durch das sichergestellt ist, dass das Druckmedium im Ruhezustand der Vorrichtung stets mit einer gleich bleibenden Kraft vorgespannt ist, so dass ein gewünschter Arbeitsdruck dauerhaft eingehalten ist. Die Verwendung eines Federelements macht eine manuelle Nachjustierung des Arbeitsdrucks überflüssig, d.h. die Nacheinstelleinrichtung wirkt selbsttätig.

Das Federelement kann derart zwischen dem Ausgleichskolben und einem in der Durchgangsbohrung vorgesehenen und in axialer Richtung bewegbaren Stellglied angeordnet sein, dass durch eine Bewegung des Stellglieds die Vorspannung des Ausgleichskolbens einstellbar ist. Durch eine Bewegung des Stellglieds in Richtung des Ausgleichskolbens wird die auf den Ausgleichskolben wirkende Federkraft erhöht, was quasi eine Aufladung des Kraftreservoirs bedeutet. Auf diese Weise wird sichergestellt, dass sich dauerhaft ein erhöhter Arbeitsdruck in der Druckkammer einstellt.

Vorteilhafterweise umfasst das Stellglied eine insbesondere manuell betätigbare Schraube, deren Außengewinde mit einem Innengewinde der Durchgangsbohrung zusammenwirkt. Ein solches Stellglied lässt sich einfach bedienen und ermöglicht eine schnelle Einstellung der Federkraft.

Gemäß einer weiteren Ausbildung der Erfindung ist ein Rückschlagventil zwischen der Durchgangsbohrung und der Druckkammer vorgesehen, das einen Rückfluss von Druckmedium in die Durchgangsbohrung zumindest im wesentlichen verhindert. Durch das Rückschlagventil ist die Druckkammer bei einer Beaufschlagung der Prallplatte, z.B. bei einem Aufprall eines Kraftfahrzeugs, strömungstechnisch von der Durchgangsbohrung getrennt, d.h. das bei der Kraftmessung beaufschlagte Druckmedium kann nicht in die Durchgangsbohrung ausweichen und den Ausgleichskolben entgegen der Federkraft des Federelements verschieben, was zu einem Druckabbau in dem Druckmedium und folglich zu einer fehlerhaften Kraftmessung führen würde. Stattdessen wird ausschließlich das in der Druckkammer befindliche Druckmedium, nicht aber das in der Durchgangsbohrung befindliche Druckmedium beaufschlagt. Die Kraftmessung erfolgt also stets unter Verwendung von gleich bleibenden Druckverhältnissen im Druckmedium. Die Messung ist folglich dauerhaft zuverlässig und reproduzierbar.

Nachfolgend wird die Erfindung rein beispielhaft anhand einer vorteilhaften Ausführungsform unter Bezugnahme auf die beigefügte Zeichnung beschrieben. Es zeigen:
- Fig. 1: einen Querschnitt durch eine Vorrichtung zur Messung von Kräften gemäß einer ersten Ausführungsform der Erfindung;
- Fig. 2: einen Querschnitt durch eine Vorrichtung zur Messung von Kräften gemäß einer zweiten Ausführungsform der Erfindung; und
- Fig. 3: eine perspektivische Ansicht der Vorrichtung von Fig. 2.

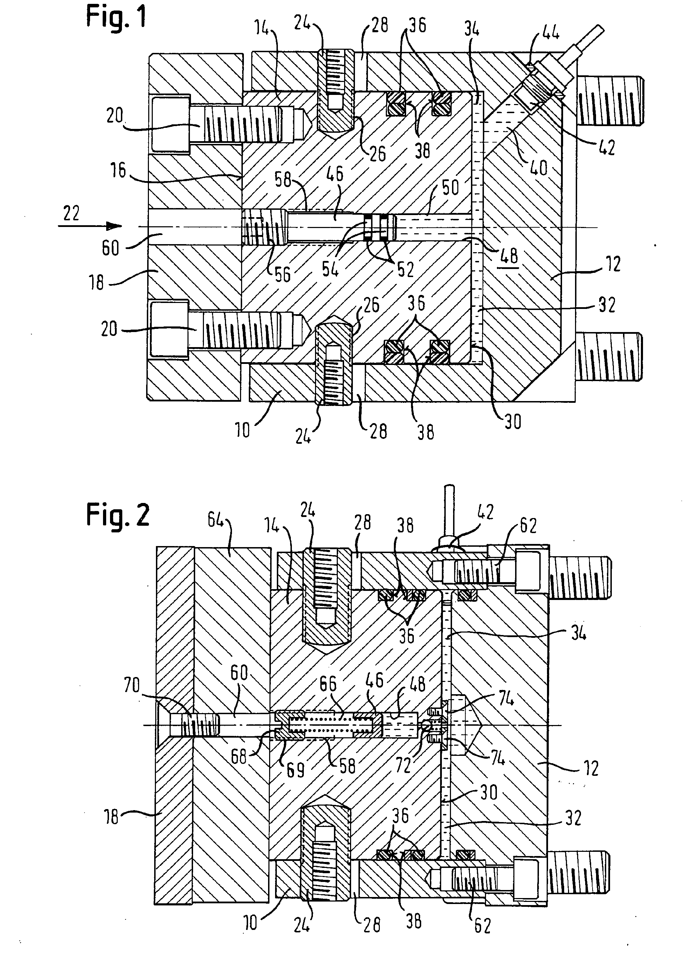

Fig. 1 zeigt eine erste Ausführungsform der erfindungsgemäßen Vorrichtung zur Messung von Kräften, die für eine Verwendung in Crashanlagen für Kraftfahrzeuge vorgesehen ist. Die Vorrichtung umfasst ein hohlzylindrisches Gehäuse 10, dessen eines Ende durch einen Gehäuseboden 12 verschlossen ist. Das Gehäuse 10 und der Boden 12 sind einstückig miteinander ausgebildet.

In dem Gehäuse 10 ist ein Kolben 14 gelagert, der in axialer Richtung verschiebbar ist. Der Querschnitt des Kolbens 14 ist an den Innenquerschnitt des Gehäuses 10 angepasst, insbesondere weist der Kolben eine zylindrische Grundform auf, deren Außendurchmesser dem Innendurchmesser des Gehäuses 10 entspricht. An der dem Gehäuseboden 12 abgewandten Stirnseite 16 des Kolbens 14 ist eine Prallplatte 18 mittels Schrauben 20 an dem Kolben 14 befestigt. Die Prallplatte 18 ist zur Aufnahme der zu messenden Kraft vorgesehen, d.h. die Prallplatte 18 gelangt in Crashanlagen mit dem aufprallenden Kraftfahrzeug in Kontakt. Gemessen wird die Stärke der Kraftkomponente 22, die rechtwinklig zur Prallplatte 18, d.h. in axialer Richtung orientiert ist.

Führungselemente 24 ragen radial aus der Mantelfläche des Kolbens 14 hervor. Die Führungselemente 24 weisen eine zylindrische Form auf und sind in mit einem entsprechenden Innengewinde versehene Bohrungen 26 des Kolbens 14 eingeschraubt.

Die Führungselemente 24 greifen in entsprechend ausgebildete, sich axial erstreckende Langlöcher 28 des Gehäuses 10 ein und bilden mit diesen eine Führung für den Kolben 14, die eine Bewegung des Kolbens 14 in axialer Richtung bezüglich des Gehäuses 10 zulässt, eine Verdrehung des Kolbens 14 relativ zum Gehäuse 10 aber verhindert.

Der Kolben 14 ist derart dimensioniert, dass zwischen dem Gehäuseboden 12 und der zum Gehäuseboden 12 weisenden Stirnseite 30 des Kolbens 14 ein Zwischenraum ausgebildet ist. Dieser Zwischenraum bildet eine abgeschlossene Druckkammer 32, die mit einem Druckmedium 34, z.B. einem Öl, gefüllt ist.

Die Langlöcher 28 bilden einen Anschlag für die Führungselemente 24 und begrenzen die Bewegung des Kolbens 14 in axialer Richtung von dem Gehäuseboden 12 weg. Auf diese Weise ist ein maximaler Abstand zwischen Kolben 14 und Gehäuseboden 12 und folglich ein maximales Volumen der Druckkammer 32 vorgegeben.

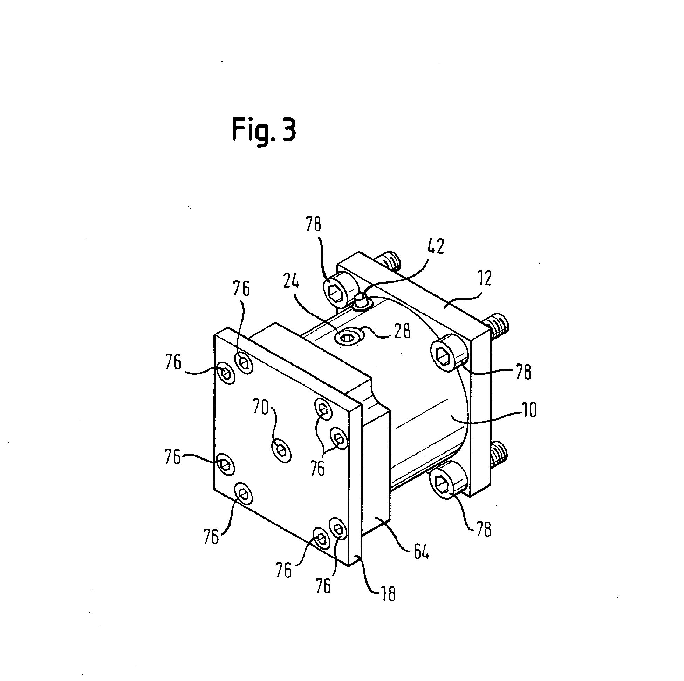

Um einen Austritt von Druckmedium 34 aus der Druckkammer 32 zu verhindern, ist der Kolben 14 gegenüber dem Gehäuse 10 abgedichtet. Die Dichtung ist durch O-Ringe 36 gebildet, die ein geeignetes Material aufweisen und in zwei in axialer Richtung zueinander beabstandeten Ringnuten 38 angeordnet sind. Im vorliegenden Ausführungsbeispiel sind in jeder Ringnut 38 jeweils zwei O-Ringe 36 vorgesehen. Es ist bei entsprechender Dimensionierung von Nut und Dichtungsring aber auch möglich, jeweils nur einen O-Ring in einer Ringnut anzuordnen (vgl. Fig. 2).

In dem Gehäuseboden 12 ist ein Sensorkanal 40 vorgesehen, dessen eines Ende mit der Druckkammer 32 verbunden und dessen anderes Ende durch einen geeigneten Drucksensor 42 verschlossen ist. Auch der Sensor 42 ist mittels einer Dichtung 44 gegenüber dem Gehäuseboden 12 abgedichtet, um einen Austritt von Druckmedium 34 aus dem Sensorkanal 40 zu verhindern. Basierend auf Berechnungen ist der Drucksensor 42 so angeordnet bzw. der Sensorkanal 40 derart gelegt, dass die Ausbreitung von Druckwellen im Druckmedium nicht zu störenden Reflexionsmessungen führt.

Wird die Prallplatte 18 bei einem Aufprall eines Kraftfahrzeugs mit der Kraft 22 beaufschlagt, so wird der Kolben 14 relativ zum Gehäuse 10 in Richtung des Gehäusebodens 12 verschoben. Dadurch erhöht sich der Druck des in der Druckkammer 32 und im Sensorkanal 40 befindlichen Druckmediums 34. Dieser Druckanstieg, der mehrere 100 bar betragen kann, wird durch den Drucksensor 42 detektiert und in ein elektrisches Signal umgewandelt. Da die in Crashanlagen zu messenden Kräfte nur kurzzeitig wirken, wird der zeitliche Verlauf des im Druckmedium 34 herrschenden Drucks mit einer Frequenz von einigen 10 kHz, z.B. mit 20 kHz abgetastet. In einer nicht gezeigten Auswerteeinheit können aus den detektierten Messsignalen relative Krafterhöhungen oder auch absolut wirkende Kräfte, Kraftverläufe und insbesondere die bei dem Aufprall auftretende Maximalkraft mit hoher Genauigkeit und hoher zeitlicher Auflösung ermittelt werden.

Damit die Beaufschlagung der Prallplatte 18 mit einer bestimmten Kraft 22 stets zu demselben Druckanstieg in dem Druckmedium 34 führt, d.h. zur Vermeidung eines Hystereseeffekts, steht das Druckmedium 34 bereits im Ruhezustand der Messvorrichtung unter einem gegenüber Normaldruck erhöhten Arbeitsdruck, es ist quasi mechanisch vorgespannt. Durch die Vorspannung des Druckmediums 34 ist sichergestellt, dass in der Druckkammer 32 keine Hohlräume mehr vorhanden sind, in die das Druckmedium 34 bei der Beaufschlagung der Prallplatte 18 ausweichen könnte. Auf diese Weise ist gewissermaßen eine Restkompressibilität des Druckmediums 34 beseitigt.

Durch eine manuell betätigbare Nachstelleinheit lässt sich der Arbeitsdruck einstellen und nachregulieren, falls er aufgrund eines leckbedingten Austritts des Druckmediums 34 aus der Druckkammer 32 abfallen sollte. Die Nachstelleinheit umfasst einen Ausgleichskolben 46, der in einer sich entlang einer Längsmittelachse des Kolbens 14 erstreckenden Durchgangsbohrung 48 des Kolbens 14 in axialer Richtung bewegbar angeordnet ist.

Die Durchgangsbohrung 48 ist zur Druckkammer 32 hin offen, so dass sich das Druckmedium 34 auch in einem Abschnitt 50 der Durchgangsbohrung 48 befindet. Der Abschnitt 50 ist durch den Ausgleichskolben 46 begrenzt. Um einen Austritt des Druckmediums 34 durch die Durchgangsbohrung 48 zu verhindern, ist der Ausgleichskolben 46 mit Hilfe von zwei Dichtungsringen 52, die im Bereich des zur Druckkammer 32 weisenden Endes des Ausgleichskolbens 46 jeweils in einer Ringnut 54 des Ausgleichskolbens 46 verlaufen, gegenüber dem Kolben 14 abgedichtet.

Das andere, von der Druckkammer 32 wegweisende Ende des Ausgleichskolbens 46 ist mit einem Außengewinde 56 versehen, das mit einem entsprechend ausgebildeten Innengewinde 58 der Durchgangsbohrung 48 zusammenwirkt. In der Prallplatte 18 ist eine mit der Durchgangsbohrung 48 fluchtende Bohrung 60 vorgesehen, durch die ein geeignetes Werkzeug zur Verdrehung des Ausgleichskolbens 46, z.B. ein Inbusschlüssel, hindurchführbar ist. Zum Schutz des Ausgleichskolbens 46 vor äußeren Einflüssen ist die Bohrung 60 durch eine nicht gezeigte Schraube verschließbar.

Durch eine Verdrehung des Ausgleichskolbens 56 in die entsprechende Richtung wird eine axiale Bewegung des Ausgleichskolbens 46 in Richtung der Druckkammer 32 und somit eine Beaufschlagung des Druckmediums 34 bewirkt. Auf diese Weise lässt sich der gewünschte Arbeitsdruck ein- bzw. nachstellen. Ist das Druckmedium 34 ein Öl, so kann der Arbeitsdruck mehrere bar betragen, ein Überdruck von etwa 1-5 bar hat sich als besonders geeignet herausgestellt.

Fig. 2 zeigt ein zweites Ausführungsbeispiel der erfindungsgemäßen Messvorrichtung. Bauteile dieser Ausführungsform, die den Bauteilen der ersten Ausführungsform baulich und/oder funktional ähnlich oder identisch sind, sind mit den gleichen Bezugszeichen versehen. Soweit nicht explizit auf Abweichungen hingewiesen ist, stimmt die Wirkungsweise der nachfolgend beschriebenen Messvorrichtung mit der von Fig. 1 überein.

Die Messvorrichtung gemäß der zweiten Ausführungsform (Fig. 2) unterscheidet sich von der voranstehend beschriebenen ersten Ausführungsform zum einen darin, dass der Gehäuseboden 12 nicht einstückig mit dem Gehäuse 10 ausgebildet, sondern als separates Bauteil durch Schrauben 62 an dem Gehäuse 10 befestigt ist, und dass die Prallplatte 18 über eine Zwischenplatte 64 mit dem Gehäuse 10 verbunden ist (vgl. auch Fig. 3).

Im Gegensatz zur ersten Ausführungsform weist die in Fig. 2 dargestellte Messvorrichtung außerdem eine selbsttätige Nachstelleinrichtung auf. Die Nachstelleinrichtung umfasst einen Ausgleichskolben 46, der in einer sich entlang einer Längsmittelachse des Kolbens 14 erstreckenden Durchgangsbohrung 48 des Kolbens 14 verschiebbar angeordnet ist. Im Unterschied zur ersten Ausführungsform ist der Ausgleichskolben 46 aber nicht manuell betätigbar, sondern durch eine Schraubendruckfeder 66 beaufschlagt, die zwischen dem Ausgleichskolben 46 und einem Stellglied 68 angeordnet ist.

Das Stellglied 68 weist ein Außengewinde 70 auf, das mit einem entsprechend ausgebildeten Innengewinde 58 der Durchgangsbohrung zusammenwirkt. Zur manuellen Betätigung des Stellgliedes 68 mittels eines Werkzeugs, z.B. eines Schraubendrehers oder eines Inbusschlüssels, ist eine mit der Durchgangsbohrung 48 fluchtende Bohrung 60 vorgesehen, die sich durch die Prallplatte 18 und die Zwischenplatte 64 hindurch erstreckt. Wie in Fig. 2 dargestellt ist, kann die Bohrung 60 zum Schutz des Stellgliedes 68 vor äußeren Einflüssen durch eine Schraube 70 verschlossen werden.

Das zur Druckkammer 32 weisende Ende der Durchgangsbohrung 48 ist durch ein Rückschlagventil 72 verschlossen, welches mittels Schrauben 74 an dem Kolben 14 befestigt ist. Der Abschnitt 50 der Durchgangsbohrung 48 zwischen Ausgleichskolben 46 und Rückschlagventil 72 ist mit dem Druckmedium 34 gefüllt, wobei das Rückschlagventil 72 eine Strömung des Druckmediums 34 aus der Durchgangsbohrung 48 in die Druckkammer 32, nicht aber in die entgegengesetzte Richtung zulässt. Auf diese Weise ist gewährleistet, dass das Druckmedium 34 bei der Beaufschlagung der Prallplatte 18 nicht aus der Druckkammer 32 in die Durchgangsbohrung 46 entweichen und den Ausgleichskolben 46 verschieben kann, wodurch der Druckanstieg im Druckmedium 34 reduziert und das Messergebnis verfälscht würde.

Durch eine entsprechende Verdrehung des Stellgliedes 68 ist das Stellglied 68 in Richtung des Gehäusebodens 12 bewegbar und die Schraubendruckfeder 66 gegen den Ausgleichskolben 46 zusammendrückbar. Fällt der Druck in der Druckkammer 32 unter den gewünschten Arbeitsdruck ab, so wird durch den federbeaufschlagten Ausgleichskolben 46 so viel Druckmedium 34 aus der Durchgangsbohrung 48 durch das Rückschlagventil 72 hindurch in die Druckkammer 32 verdrängt, bis der Druck in der Druckkammer 32 wieder den gewünschten Wert des Arbeitsdrucks erreicht hat. Die Nachstelleinheit bildet also gewissermaßen einen Kraftspeicher, durch den der Druck in der Druckkammer 32 automatisch auf den gewünschten Arbeitsdruck geregelt wird.

Fig. 3 zeigt eine perspektivische Ansicht der Messvorrichtung gemäß der zweiten Ausführungsform. Zu erkennen ist eine rechteckige Form der Prallplatte 18, wobei die Prallplatte in jedem Eckbereich durch jeweils zwei Schrauben 76 mit der Zwischenplatte 64 verschraubt ist. Durch nicht dargestellte Schraubverbindungen ist die Zwischenplatte 64 ihrerseits mit dem Gehäuse 12 verbunden.

Auch der Gehäuseboden 12 ist als rechteckige Platte ausgebildet, in deren Eckbereichen jeweils eine Schraube 78 zur Befestigung der Messvorrichtung an einer nicht gezeigten Prallwand einer Crashtestanlage vorgesehen ist.

### Bezugszeichenliste

- 10: Gehäuse
- 12: Gehäuseboden
- 14: Kolben
- 16: Stirnseite
- 18: Prallplatte
- 20: Schraube
- 22: Kraftkomponente
- 24: Führungselemente
- 26: Bohrung
- 28: Langloch
- 30: Stirnseite
- 32: Druckkammer
- 34: Druckmedium
- 36: O-Ring
- 38: Ringnut
- 40: Sensorkanal
- 42: Drucksensor
- 44: Dichtung
- 46: Ausgleichskolben
- 48: Durchgangsbohrung
- 50: Abschnitt
- 52: Dichtungsring
- 54: Ringnut
- 56: Außengewinde
- 58: Innengewinde
- 60: Bohrung
- 62: Schraube
- 64: Zwischenplatte
- 66: Schraubendruckfeder
- 68: Stellglied
- 70: Außengewinde
- 72: Rückschlagventil
- 74: Schraube
- 76: Schraube
- 78: Schraube

## Patentansprüche

1. Vorrichtung zur Messung von Kräften, insbesondere von bei einem Aufprall von Kraftfahrzeugen in Crashanlagen auftretenden Kräften, mit wenigstens einem Gehäuse (10), in dem ein eine Prallplatte (18) aufweisender Kolben (14) verschiebbar gelagert ist, wobei zwischen einem Boden (12) des Gehäuses (10) und dem Kolben (14) eine abgeschlossene Druckkammer (32) gebildet ist, die mit einem Druckmedium (34) gefüllt ist, und mit einem mit der Druckkammer (32) kommunizierenden Drucksensor (42) zur Messung von durch Beaufschlagung der Prallplatte (18) verursachten Druckänderungen in dem Druckmedium (34).

2. Vorrichtung nach Anspruch 1,
**dadurch gekennzeichnet,**
**dass** das Druckmedium (34) ein Fluid, insbesondere eine Flüssigkeit und vorzugsweise ein Öl ist.

3. Vorrichtung nach Anspruch 1 oder 2,
**dadurch gekennzeichnet,**
**dass** das Druckmedium (34) in einer Ruhestellung der Vorrichtung unter einem erhöhten Arbeitsdruck steht.

4. Vorrichtung nach Anspruch 3,
**dadurch gekennzeichnet,**
**dass** eine Nachstelleinrichtung vorgesehen ist, durch die der Arbeitsdruck stets auf einem vorgegebenen Wert gehalten werden kann.

5. Vorrichtung nach Anspruch 4,
**dadurch gekennzeichnet,**
**dass** die Nachstelleinrichtung einen Ausgleichskolben (46) umfasst, der in axialer Richtung bewegbar in einer Durchgangsbohrung (48) des Kolbens (14) gelagert ist, die mit der Druckkammer (32) in Verbindung steht.

6. Vorrichtung nach Anspruch 4 oder 5,
**dadurch gekennzeichnet,**
**dass** die Nachstelleinrichtung manuell betätigbar ist.

7. Vorrichtung nach Anspruch 6,
**dadurch gekennzeichnet,**
**dass** der Ausgleichskolben (46) ein Außengewinde (56) aufweist, das mit einem entsprechend ausgebildeten Innengewinde (58) der Durchgangsbohrung (48) zusammenwirkt.

8. Vorrichtung nach Anspruch 4 oder 5,
**dadurch gekennzeichnet,**
**dass** die Nachstelleinrichtung selbsttätig ist.

9. Vorrichtung nach Anspruch 8,
**dadurch gekennzeichnet,**
**dass** ein Ausgleichskolben (46) der Nachstelleinrichtung insbesondere durch ein Federelement (66), bevorzugt eine Schraubendruckfeder, in Richtung der Druckkammer (32) vorgespannt ist.

10. Vorrichtung nach Anspruch 9,
**dadurch gekennzeichnet,**
**dass** ein Federelement (66) derart zwischen dem Ausgleichskolben (46) und einem in der Durchgangsbohrung (48) vorgesehenen und in axialer Richtung bewegbaren Stellglied (68) angeordnet ist, dass durch eine Bewegung des Stellglieds (68) die Vorspannung des Ausgleichskolbens (46) einstellbar ist.

11. Vorrichtung nach Anspruch 10,
**dadurch gekennzeichnet,**
**dass** das Stellglied (68) eine insbesondere manuell betätigbare Schraube umfasst, deren Außengewinde (70) mit einem Innengewinde (58) der Durchgangsbohrung (48) zusammenwirkt.

12. Vorrichtung nach einem der Ansprüche 8 bis 11,
**dadurch gekennzeichnet,**
**dass** ein Rückschlagventil (72) zwischen der Durchgangsbohrung (48) und der Druckkammer (32) vorgesehen ist, das einen Rückfluss von Druckmedium (34) in die Durchgangsbohrung (48) zumindest im wesentlichen verhindert.
